# EUROPEAN PATENT SPECIFICATION

(11) **EP 1 283 155 B1**
(45) Date of publication and mention of the grant of the patent: **01.08.2007**
(21) Application number: 02017864.6
(22) Date of filing: 08.08.2002
(51) Int. Cl.: B62D 65/00, B62D 29/04

(54) **Method of producing a vehicle outer panel**
Herstellungsverfahren einer Fahrzeugaussenplatte
Procédé de fabrication d'un panneau extérieur de véhicule

(30) Priority: 10.08.2001 IT TO20010811; 10.08.2001 IT TO20010812
(43) Date of publication of application: 12.02.2003
(73) Proprietor: Selmat Automotive S.p.A., 10121 Torino (IT)
(72) Inventor: Maccherrone, Michele c/o Sisoldo, 10123 Torino (IT)
(74) Representative: Franzolin, Luigi

(56) References cited:
- EP-A- 0 306 923
- DE-A- 4 429 627
- FR-A- 2 116 226
- FR-A- 2 487 705

## Description

The present invention relates to a method of producing a vehicle outer panel, in particular a streamlined panel for industrial vehicles, to which the following description refers purely by way of example.

As is known, some industrial vehicles comprise a tractor cab, and a trailer with a front surface normally larger than that of the cab, so that the cab must be fitted with a kit of streamlined panels or so-called spoilers for deflecting and directing the air when the vehicle is moving.

Known streamlined panels are made of so-called fiberglass-reinforced plastic by compression molding a mass of resin, in particular polyester, impregnated with glass fibers. By virtue of the glass material embedded in the resin in the form of fibers or threads, known streamlined panels of the above type have a high degree of mechanical strength and rigidity, but are practically impossible to recycle on account of the glass material being embedded in the resin.

Moreover, after molding, the outer surface of known streamlined panels of the above type is not perfectly smooth, on account of portions of the glass fibers projecting along it.

To obtain smooth, paintable surfaces, known streamlined panels of the above type must be sanded, this increasing production time and cost.

The above known solutions also have the drawbacks of being subject to surface cracking, and of working loose from the vehicle brackets.

DE4429627 discloses a plate shaped component which is composed of two bonded plates of the same plastics material. At least one is deep drawn into a shell to give the reinforcement to the hollow body. The material for the two plates is preferably polypropylene. In the manufacturing process of the plate shaped component, a carpeting layer is placed in the bottom of the mould before deep drawing.

This document covers the preamble features of independent claim 1.

FR2116226 discloses a plate shaped component having two sheets. One of the sheets is undulate.

FR2487705 refers to a process for manufacturing deep drawn parts, particularly for bodies of automobiles. The part is composed by two sheets put in contact one to the other. One of the sheets is deep drawn by means of a fluid under pressure.

It is the object of the present invention to provide a method of producing a vehicle outer panel, designed to provide a straightforward, low-cost solution to the above problems, and which in particular provides for obtaining outer panels which are relatively light and at the same time rigid enough to withstand the air pressure produced when the vehicle is moving.

According to the present invention, there is provided a method of producing a streamlined panel or a body panel for vehicles, as claimed in Claim 1.

A non-limiting embodiment of the invention will be described by way of example with reference to the accompanying drawings, in which:
Figure 1 shows a partial view in perspective of a vehicle having a number of streamlined panels in accordance with the teachings of the present invention;
Figure 2 shows, with parts removed for clarity, a preferred embodiment of the streamlined panel in accordance with the teachings of the present invention;
Figures 3 and 4 show sectioned larger-scale views in perspective of two details of the streamlined panels in the preceding Figures;
Figures 5, 6 and 7 show schematic views in perspective of a sequence of steps in the formation of the panel according to the present invention;
Figure 8 is similar to Figures 5 and 6, and shows a variation of the method for producing the streamlined panel in Figures 5 and 6;
Figure 9 shows a larger-scale section of a detail of a body panel produced in accordance with the teachings of the present invention.

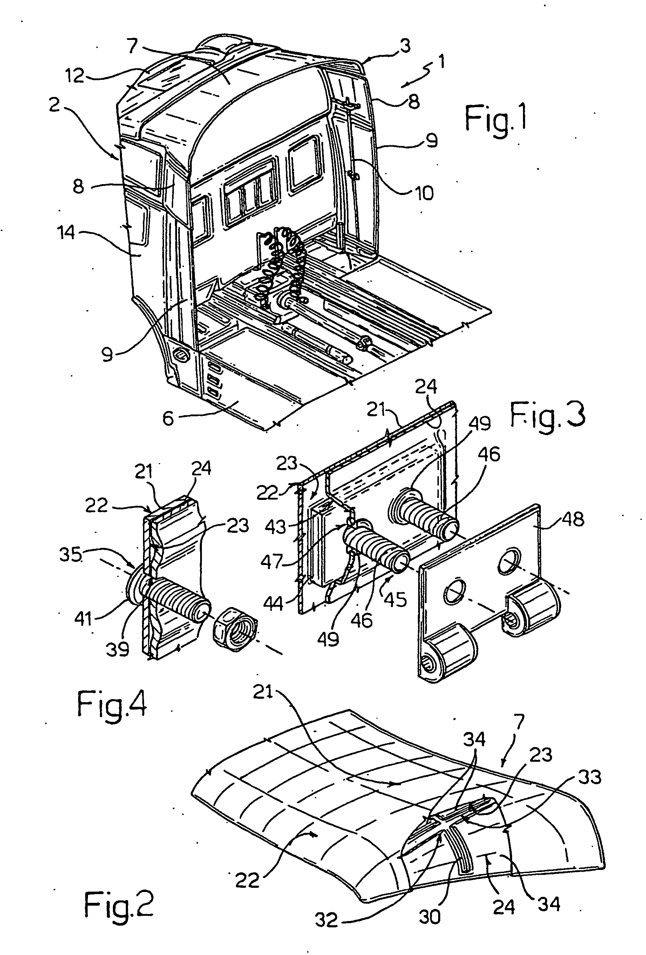

Number 1 in Figure 1 indicates as a whole an industrial vehicle comprising a front tractor cab 2 (shown partly) for towing a rear load or trailer (not shown).

Vehicle 1 is fitted with a kit 3 of streamlined panels for guiding the airflow between cab 2 and the trailer when the vehicle is moving, so as to reduce the aerodynamic drag of vehicle 1. More specifically, kit 3 comprises two bottom lateral or so-called lateral streamlining panels 6 extending from cab 2 along both sides, between the front and rear wheels (not shown) of vehicle 1; and a number of panels or so-called spoilers 7, 8, 9 connected to cab 2 by respective metal fastening frames 10 (shown partly). Panel 7 forms an extension of the roof 12 of cab 2; panels 9 form extensions of side panels 14 of cab 2, rotate about respective vertical axes (not shown), and are also known as lateral streamlining appendixes; and panels 8 extend between panels 7 and 9'.

The following description refers solely to panel 7, the other panels 6, 8 and 9 being made in the same way.

More specifically, in the following description, the term "panel" or "outer panel" is intended to mean a panel defining an outer surface of the vehicle in general. That is, not only spoilers, but also body panels defining the outer contour of the vehicle, such as the roof, side panels, side doors, fixed rear panel, stowage compartment door, hood panel, or drop-down side panels.

With reference to Figure 2, panel 7 (shown partly) comprises a contoured skin or wall 21 forming an extension of the outer contour of vehicle 1 and defined by a streamlined surface 22 for deflecting and guiding airflow when vehicle 1 is moving, and by an inner surface 23 opposite surface 22. Panel 7 also comprises a contoured skin or wall 24 facing surface 23 and in turn comprising a number of ribs 30, each defined by a relative omega-shaped portion projecting on the opposite side to wall 21.

Ribs 30 intersect to define a ribbed portion or intermediate reinforcing structure 32 of wall 21, and, together with surface 23, define a closed network of communicating channels 33. Wall 24 also comprises a number of intermediate portions 34 between ribs 30, and which are complementary in shape to that of surface 23, rest against surface 23, and are connected integrally to wall 21, e.g. by means of adhesive material or, as in the Figure 4 variation, by means of bolts 35 (only one shown).

In the Figure 4 variation, each bolt 35 extends through a respective hole 39 through both walls 21, 24, and comprises a head 41 located along surface 22 and flat in shape so as not to impair the streamlined characteristics of surface 22.

With reference to Figure 3, in addition to channels 33, walls 21, 24 also define between them a number of cavities 43, each of which houses a relative plate 44 glued to walls 21, 24 and forming part of a fastening device 45. Device 45 comprises a number of screws 46 (only two shown) connected, e.g. welded, integrally to plate 44, and each extending through a relative hole 47 in wall 24 to fix plate 44, by means of nuts not shown, to a bracket 48 which is connected to a metal fastening frame of panel 7.

Device 45 also comprises a number of elastic elements 49 interposed radially between each screw 46 and wall 24, and axially between wall 24, bracket 48 and plate 44, and which in use provide for compensating for any difference in thermal expansion of panel 7 and the relative metal frame.

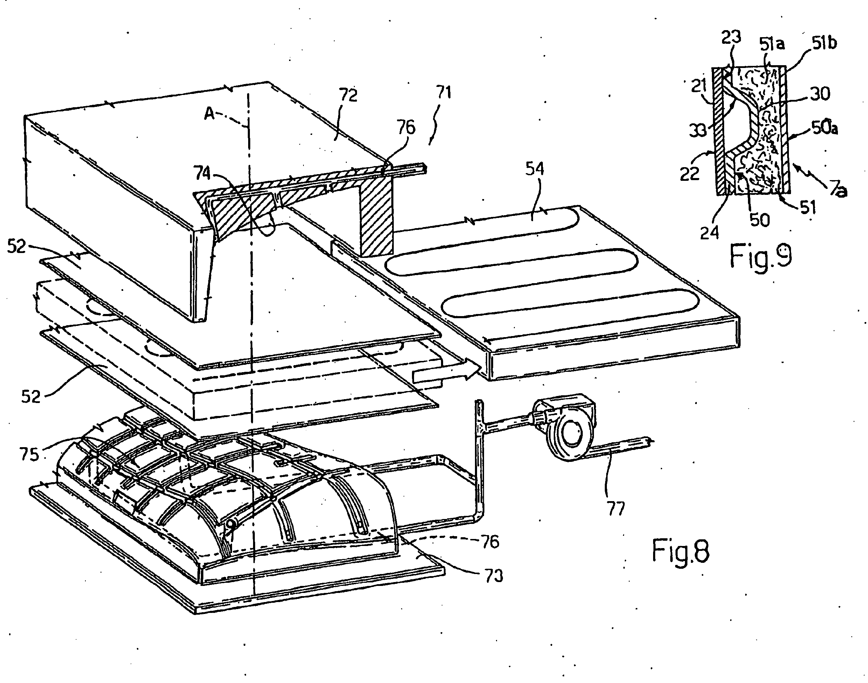

The Figure 9 variation relates to a body panel 7a, the component parts of which are indicated using the same reference numbers as for panel 7. Wall 24 has a surface 50 extending on the opposite side to surface 22 and covered with a covering 51, which has a surface 50a defining, in particular, the passenger compartment of vehicle 1 and contoured independently of surface 50.

Covering 51 comprises an inner layer 51b connected to wall 24 and made of sound-absorbing or soundproofing or shock-absorbing material - preferably foam material; and a layer 51a which defines surface 50a, is connected to layer 51b, is preferably co-molded with layer 51b, and is made of cloth or carpeting. Alternatively, layer 51a is made of polymer material commonly referred to as imitation leather, or of any other material for enhancing the appearance of surface 50a.

In variations not shown, covering 51 comprises only one of layers 51b, 51a, or is partly detached from wall 24 to define further cavities in panel 7a.

In further variations not shown, cavities 43, channels 33 and/or any cavities between wall 24 and covering 51 define passages for electric wiring or piping of vehicle 1, or housings for interior lights or external indicator lights or other devices of vehicle 1.

In a further variation not shown, channels 33 and/or cavities 43 are filled with other, e.g. honeycomb, material, to further strengthen panel 7, 7a.

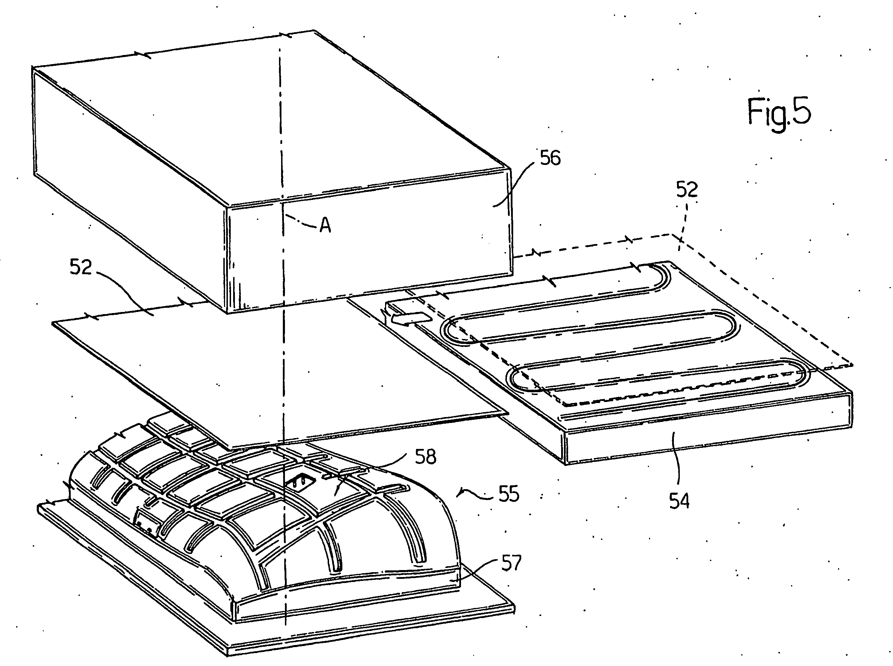

With reference to schematic Figures 5, 6 and 7, each wall 21, 24 is shaped from a respective extruded sheet 52 of thermoplastic polymer material, preferably a polycarbonate-based alloy, or materials known commercially as ABS or ABS-ASA. More specifically, the latter material may be at least partly colored "in bulk", i.e. comprise at least one co-extruded layer containing coloring agents directly in its internal composition.

After being withdrawn from a relative store (not shown) and fitted to respective supporting frames (not shown), the two sheets 52 are preheated or dried for a given time at a temperature of roughly 80 to 110°C by a heating device 54 (shown schematically) to remove any humidity absorbed during storage.

The two sheets 52 are then fed to respective thermoforming stations, only one of which, indicated 55, is shown in Figure 5.

Station 55 houses a compression molding fixture comprising a mold 56 and a matching mold 57, which have respective contoured, substantially complementary forming surfaces 58 on opposite sides of sheet 52, are heated to a temperature of roughly 80 to 180°C in known manner not shown, and are movable with respect to each other in a direction A perpendicular to sheet 52 to permanently deform sheet 52.

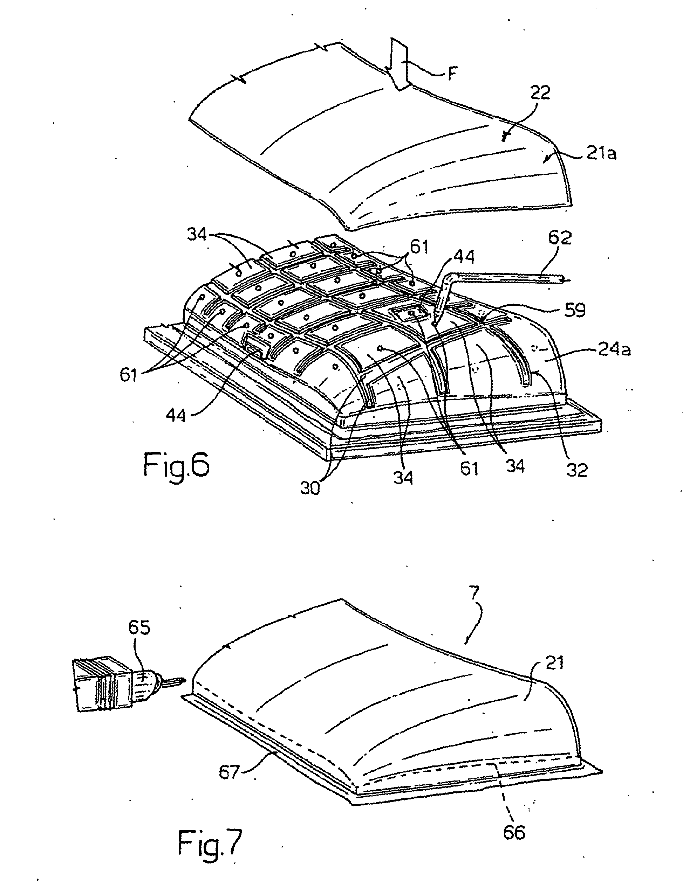

Deformation of one sheet 52 produces a semifinished wall 24a comprising portions 34 and ribs 30 defining respective grooves eventually defining channels 33 of the finished panel 7. At the same time, deformation of the other sheet 52 produces a semifinished wall 21a defined by surface 22 (Figure 6).

With reference to Figure 6, before connecting walls 24a and 21a, devices 45 are fitted to wall 24a by inserting plates 44 inside the relative cavities in wall 24a. Walls 21a, 24a are then positioned facing each other and connected integrally to each other, in particular, by applying a layer of adhesive material 61 to portions 34 and plates 44 by means of a glue dispensing unit 62 (shown schematically), by placing portions 34 in contact with surface 23, and, finally, by exerting a pressure F in known manner, not described in detail, so that walls 21a and 24a adhere to each other.

As shown in Figure 7, a waste portion 64 is removed from walls 24a and 21a by a cutting unit 65 (shown schematically) to obtain the finished edge 66 (shown by the dash line) of panel 7. Alternatively, walls 21a, 24a may be cut before being connected.

To obtain the desired color of surface 22, surface 22 may be painted, or, as stated, coloring may be achieved at the outset using sheets 52 at least partly colored "in bulk".

Finally, if necessary, and as shown in the Figure 9 variation, at least part of surface 50 is covered, in particular by forming cover 51 separately and connecting cover 51 to walls 21, 24, e.g. by means of adhesive or click-on retaining devices (not shown).

In the Figure 8 variation, sheets 52 are thermoformed at a single station 71 by vacuum molding in respective molds 72, 73, which comprise respective contoured forming surfaces 74, 75 defining negatives of the outer surfaces of panel 7, and have inner channels 76 (shown partly) having inlet openings formed in surfaces 74, 75, and outlet openings communicating in fluidtight manner with a vacuum unit 77 (shown schematically).

When sheets 52 are heated and a vacuum generated by unit 77, molds 72, 73 first deform sheets 52 to obtain semifinished walls 21a, 24a, and are then brought closer together in direction A to mate walls 21a, 24a which, on contacting each other, are joined integrally by fusion with no need for gluing or bolts 35.

Portions 64 are then cut off, surface 22 is possibly painted and surface 50 possibly covered, and one or more fastening elements may possibly be fitted to the outside of panel 7, in place of devices 45, to fit panel 7 to vehicle 1, e.g. to a respective fastening frame.

By wall 24 defining, together with wall 21, a number of relatively rigid hollow or shell portions, the method described therefore provides for producing a panel 7 requiring no glass-fiber-based materials, and which is therefore fully recyclable.

Any other materials in cavities 43 or channels 33, and the materials of cover 51 can also be separated from the polymer material of walls 21 and 24 and recycled easily.

Panel 7 is also extremely rigid and strong by ribs 30 being formed in different directions to form reinforcing structure 32.

The thermoplastic polymer material of walls 24, 21 provides for obtaining extremely lightweight panels 7, 7a, which is particularly advantageous in the case of body panel applications.

Using raw material in sheet form eliminates the need for complex, high-cost units for injecting and metering liquid plastic material into injection molds. Vacuum molding also enables one thermoforming station 71 to be used for both sheets 52, thus eliminating gluing and so reducing the cost of panel 7.

The construction characteristics of panel 7 also enable plates 44 to be inserted between walls 21, 24, with no need for any additional fastening devices on the outside of panel 7, which is therefore assembled extremely quickly and easily.

Clearly, changes may be made to the method as described herein without, however, departing from the scope of the present invention.

In particular, the outer panels of the present invention may be fitted to vehicles other than vehicle 1.

The thermoplastic polymer material of walls 21, 24 may be other than the one indicated by way of example, and/or wall 24 may cover only part of surface 23 of wall 21. In particular, wall 24 may be defined by a number of separate contoured elements fitted to wall 21, e.g. by a number of reinforcing strips preferably located at the attachments of the frame to which the panel is to be connected.

## Claims

1. A method of producing a streamlined panel or a body panel (6, 7, 8, 9) for vehicles (1); the method comprising the steps of:
- forming a first wall (21a), defined by an outer surface (22) extending, in use, outside said vehicle (1), and a second wall (24a), by thermoforming respective sheets (52) of thermoplastic polymer material in respective moulds;
- when forming said second wall (24a)
- forming a number of recesses (33, 43) in said second wall (24a);
- shaping a number of intermediate portions (34) between said recesses (33, 43) to a shape complementary to that of said first wall (21a);
- connecting said second wall (24a) integrally to said first wall (21a) in a position facing said first wall (21a) and on the opposite side to said outer surface (22);
- fitting connecting means (45) to said second wall (24a);
**characterised in that**
- the step of connecting said first and second walls (21a,24a) is carried out by gluing said intermediate portions (34) and said first wall (21a) to each other;
- said step of fitting connecting means is carried out by inserting a supporting body (44) inside a said recess (43) before connecting said first and said second wall (21a,24a).

2. A method as claimed in Claim 1, **characterized by** comprising the further step of gluing said supporting body (44) to at least one of said first and said second wall (21a,24a).

3. A method as claimed in Claim 1 or 2, **characterised in that** at least a layer of the thermoplastic polymer material used to form said first wall contains colouring agents directly in its internal composition.

4. A method as claimed in anyone of the preceding Claims, **characterised by** also comprising the step of cutting said first and said second wall (21a,24a) along a given edge (66) to remove respective waste portions (67), before connecting said first and said second wall (21a,24a).

5. A method as claimed in anyone of the preceding Claims, **characterized by** selecting said sheets (52) of a polycarbonate-based alloy.

6. A method as claimed in anyone of the preceding Claims, **characterized in that** said thermoforming is performed by vacuum molding.

7. A method as claimed in anyone of the preceding Claims, **characterized in that** thermoforming said second wall (24a) comprises forming a ribbed portion (32) defining a network of intersecting channels (33, 43).

8. A method as claimed in any one of the preceding Claims, **characterized by** also comprising the steps of fitting a cover member (51) to said second wall (24), on the opposite side to said outer surface (22).

9. A panel produced according to the method claimed in anyone of the preceding Claims.

10. Panel according to claim 9, **characterised in that** said connecting means (45) comprise at least one fastening member (46) integrally connected to said supporting body and extending from said supporting body (44) through a hole (47) in said second wall (24).

11. Panel according to claim 10, **characterised in that** said connecting means comprise deformable means (49) interposed between said fastening member (46) and said second wall (24).

12. Panel according to anyone of Claims 9 to 11, **characterised by** comprising a cover member (51) fitted to said second wall (24), on the opposite side to said outer surface (22), and comprising at least one portion (51b) made of foam material.

13. Panel as claimed in Claim 12, **characterized in that** said cover member (51) further comprises a layer (51a) defining an inner surface (50) of said vehicle (1) and at least partly enclosing said portion (51b) made of foam material.

14. Panel as claimed in Claim 13, **characterized in that** said layer (51a) is co-molded to said portion (51b) made of foam material.

## Patentansprüche

1. Verfahren zur Herstellung eines stromlinienförmig gestalteten Elements oder Karosserieteils (6, 7, 8, 9) für Fahrzeuge (1); wobei das Verfahren die Schritte umfasst:
- Bilden einer ersten Wand (21a), definiert durch eine Außenfläche (22), welche sich im Gebrauch auf der Außenseite des Fahrzeugs (1) erstreckt, und einer zweiten Wand (24a) durch Thermoformen entsprechender Flachmaterialien (52) aus einem thermoplastischen Polymermaterial in entsprechenden Formen;
- beim Bilden der zweiten Wand (24a):
- Bilden einer Anzahl von Ausnehmungen (33, 43) in der zweiten Wand (24a);
- Formen einer Anzahl von Zwischenbereichen (34) zwischen den Ausnehmungen (33, 43) in eine Gestalt, die komplementär ist zu derjenigen der ersten Wand (21a);
- integrales Verbinden der zweiten Wand (24a) mit der ersten Wand (21a) in einer der ersten Wand (21a) zugekehrten Position, auf der der Außenfläche (22) gegenüberliegenden Seite;
- Anbringen von Verbindungsmitteln (45) an der zweiten Wand (24a);
**dadurch gekennzeichnet, dass**
- der Schritt des Verbindens der ersten und der zweiten Wand (21a, 24a) durchgeführt wird durch Aneinanderkleben der Zwischenbereiche (34) und der ersten Wand (21a);
- der Schritt des Anbringens von Verbindungsmitteln durchgeführt wird durch Einführen eines Haltekörpers (44) in das Innere der Ausnehmung (43) vor dem Verbinden der ersten und der zweiten Wand (21a, 24a).

2. Verfahren nach Anspruch 1, **dadurch gekennzeichnet, dass** es als weiteren Schritt umfasst: Verkleben des Haltekörpers (44) mit mindestens einer der Wände, welche sind erste Wand und zweite Wand (21a, 24a).

3. Verfahren nach Anspruch 1 oder 2, **dadurch gekennzeichnet, dass** mindestens eine Lage von dem zum Bilden der ersten Wand verwendeten thermoplastischen Polymermaterial Farbmittel direkt in ihrer inneren Zusammensetzung enthält.

4. Verfahren nach einem der voranstehenden Ansprüche, **dadurch gekennzeichnet, dass** es ferner den Schritt umfasst: Schneiden der ersten und der zweiten Wand (21a, 24a) entlang einer gegebenen Kante (66) zum Entfernen entsprechender Abfallbereiche (67) vor dem Verbinden der ersten und der zweiten Wand (21a, 24a).

5. Verfahren nach einem der voranstehenden Ansprüche, **dadurch gekennzeichnet, dass** die Flachmaterialien (52) aus einer Polycarbonat-basierten Legierung gewählt sind.

6. Verfahren nach einem der voranstehenden Ansprüche, **dadurch gekennzeichnet, dass** das Thermoformen durch Vakuumformen durchgeführt wird.

7. Verfahren nach einem der voranstehenden Ansprüche, **dadurch gekennzeichnet, dass** das Thermoformen der zweiten Wand (24a) das Bilden eines Rippenbereichs (32) umfasst, welcher ein Netzwerk von sich schneidenden Kanälen (33, 43) definiert.

8. Verfahren nach einem der voranstehenden Ansprüche, **dadurch gekennzeichnet, dass** es ferner die Schritte umfasst: Anbringen eines Abdeckgliedes (51) an der zweiten Wand (24), auf der der Außenfläche (22) gegenüberliegenden Seite.

9. Element, hergestellt gemäß dem Verfahren nach einem der voranstehenden Ansprüche.

10. Element nach Anspruch 9, **dadurch gekennzeichnet, dass** die Verbindungsmittel (45) mindestens ein Befestigungsglied (46) umfassen, welches mit dem Haltekörper integral verbunden ist und sich von dem Haltekörper (44) durch ein Loch (47) in der zweiten Wand (24) hindurch erstreckt.

11. Element nach Anspruch 10, **dadurch gekennzeichnet, dass** die Verbindungsmittel verformbare Mittel (49) umfassen, welche zwischen dem Befestigungsglied (46) und der zweiten Wand (24) angeordnet sind.

12. Element nach einem der Ansprüche 9 bis 11, **dadurch gekennzeichnet, dass** es umfasst: ein Abdeckglied (51), welches an der zweiten Wand (24) auf der der Außenfläche (22) gegenüberliegenden Seite angebracht ist und mindestens einen Bereich (51b) umfasst, der aus einem Schaumstoffmaterial hergestellt ist.

13. Element nach Anspruch 12, **dadurch gekennzeichnet, dass** das Abdeckglied (51) ferner eine Lage (51a) umfasst, welche eine Innenfläche (50) des Fahrzeugs (1) definiert und den aus Schaumstoffmaterial hergestellten Bereich (51b) mindestens teilweise umgibt.

14. Element nach Anspruch 13, **dadurch gekennzeichnet, dass** die Lage (51) zusammen mit dem aus Schaumstoffmaterial hergestellten Bereich (51b) geformt ist.

## Revendications

1. Procédé de fabrication d'un panneau profilé ou d'un panneau de carrosserie (6, 7, 8, 9) pour véhicules (1) ; le procédé comprenant les étapes de :
- formage d'une première paroi (21a), définie par une surface extérieure (22) s'étendant, en service, à l'extérieur dudit véhicule (1), et d'une deuxième paroi (24a), par thermoformage de feuilles (52) respectives de matériau polymère thermoplastique dans des moules respectifs;
- lors du formage de ladite deuxième paroi (24a)
- formage d'un certain nombre d'évidements (33, 43) dans ladite deuxième paroi (24a);
- façonnage d'un certain nombre de parties intermédiaires (34) entre lesdits évidements (33, 43) en une forme complémentaire à celle de ladite première paroi (21a) ;
- assemblage de ladite deuxième paroi (24a) de manière solidaires avec ladite première paroi (21a) dans une position faisant face à ladite première paroi (21a) et sur le côté opposé à ladite surface extérieure (22) ;
- fixation de moyens d'assemblage (45) à ladite deuxième paroi (24a) ;
**caractérisé en ce que**
- l'étape d'assemblage desdites première et deuxième parois (21a, 24a) est réalisée par collage desdites parties intermédiaires (34) et de ladite première paroi (21a) l'une à l'autre ;
- ladite étape de fixation des moyens d'assemblage est réalisée en insérant un corps support (44) à l'intérieur d'un dit évidement (43) avant d'assembler ladite première et deuxième paroi (21a, 24a).

2. Procédé selon la revendication 1, **caractérisé en ce qu'**il comprend en outre l'étape de collage dudit corps support (44) à au moins une desdites première et deuxième paroi (21a, 24a).

3. Procédé selon la revendication 1 ou 2, **caractérisé en ce qu'**au moins une couche du matériau polymère thermoplastique utilisé pour former ladite première paroi contient des agents colorants directement dans sa composition interne.

4. Procédé selon l'une quelconque des revendications précédentes, **caractérisé en ce qu'**il comprend aussi l'étape de découpage de lesdites première et deuxième parois (21a, 24a) suivant un bord donné (66) pour enlever des parties de déchet (67) respectives, avant d'assembler ladite première et deuxième paroi (21a, 24a).

5. Procédé selon l'une quelconque des revendications précédentes, **caractérisé par** la sélection desdites feuilles (52) d'un alliage à base de polycarbonate.

6. Procédé selon l'une quelconque des revendications précédentes, **caractérisé en ce que** ledit thermoformage est réalisé par moulage sous vide.

7. Procédé selon l'une quelconque des revendications précédentes, **caractérisé en ce que** le thermoformage de ladite deuxième paroi (24a) comprend la formation d'une partie striée (32) définissant un réseau de canaux croisés (33, 43).

8. Procédé selon l'une quelconque des revendications précédentes, **caractérisé en ce qu'**il comprend aussi les étapes de fixation d'un élément de recouvrement (51) à ladite deuxième paroi (24), sur le côté opposé à ladite surface extérieure (22).

9. Panneau produit selon le procédé revendiqué dans l'une quelconque des revendications précédentes.

10. Panneau selon la revendication 9, **caractérisé en ce que** lesdits moyens d'assemblage (45) comprennent au moins un élément de fixation (46) relié de manière solidaire audit corps support et s'étendant depuis ledit corps support (44) à travers un trou (47) dans ladite deuxième paroi (24).

11. Panneau selon la revendication 10, **caractérisé en ce que** lesdits moyens d'assemblage comprennent des moyens déformables (49) intercalés entre ledit élément de fixation (46) et ladite deuxième paroi (24).

12. Panneau selon l'une quelconque des revendications 9 à 11, **caractérisé par le fait qu'**il comprend un élément de recouvrement (51) fixé à ladite deuxième paroi (24), sur le côté opposé à ladite surface extérieure (22), et en ce qu'il comprend au moins une partie (51b) réalisée en matériau mousse.

13. Panneau selon la revendication 12, **caractérisé en ce que** ledit élément de recouvrement (51) comprend en outre une couche (51a) définissant une surface interne (50) dudit véhicule (1) et enfermant au moins partiellement lesdites parties (51b) réalisées en matériau mousse.

14. Panneau selon la revendication 13, **caractérisé en ce que** ladite couche (51a) est co-moulée avec ladite partie (51b) réalisée en matériau mousse.
